# EUROPEAN PATENT APPLICATION

(11) **EP 3 456 285 A1**
(43) Date of publication of application: **20.03.2019**
(21) Application number: 17912357.5
(22) Date of filing: 19.06.2017
(51) Int. Cl.: A61C 7/20

(54) **ORTHODONTIC ARCHWIRE, METHOD FOR MANUFACTURING ORTHODONTIC ARCHWIRE, AND METHOD FOR ATTACHING ORTHODONTIC ARCHWIRE**

(71) Applicant: Kakazu, Yoshiya, Urasoe-shi, Okinawa 901-2126 (JP)
(72) Inventor: Kakazu, Yoshiya, Urasoe-shi, Okinawa 901-2126 (JP)
(74) Representative: Isarpatent
(86) International application number: PCT/JP2017/022593
(87) International publication number: WO 2018/235146

(57) **Abstract**

[Object] An object is to provide an orthodontic archwire which applies a proper torque to the tooth root of a target tooth that needs to be moved and that is an orthodontic target, which applies a proper horizontal force to the tooth crown of the target tooth so as to move the entire target tooth in parallel and which thereby can prevent root resorption due to an orthodontic treatment, a method for manufacturing such an orthodontic archwire and a method for attaching such an orthodontic archwire.

[Solution Means] An archwire 2 includes a winding portion 213a which is formed at a main line portion 21, which is formed at a position corresponding to a gap S formed by removal of a tooth of a person to be treated and which is formed by winding the archwire 2 three times or four times. When the archwire 2 described above is fitted to the teeth T of the person to be treated, and the winding portion 213a is activated, at an early stage of correction, a torque Ft is made to act on the tooth root Tr of a target tooth, and at a later stage of the correction, a horizontal force Fh is made to act on the tooth crown Tc of the target tooth, with the result that the entire target tooth is moved in the direction of the gap S.

## Description

### Technical Field

The present invention relates to an orthodontic archwire, a method for manufacturing such an orthodontic archwire and a method for attaching such an orthodontic archwire . More specifically, the present invention relates to an orthodontic archwire which applies a proper torque to the tooth root of a target tooth that needs to be moved and that is an orthodontic target, which applies a proper horizontal force to the tooth crown of the target tooth
so as to move the entire target tooth in parallel and which thereby can prevent root resorption due to an orthodontic treatment, a method for manufacturing such an orthodontic archwire and a method for attaching such an orthodontic archwire .

### Background Art

Conventionally, as a typical orthodontic treatment method for correcting the alignment of teeth, a multi-bracket method is mentioned. The multi-bracket method is an orthodontic method in which orthodontic brackets are individually fitted to tooth crowns that are the surfaces of teeth, in which a mechanical tension force (the restoring force of pressing, pulling back, twisting, etc.) of an archwire attached to the adjacent orthodontic brackets is applied to the teeth and in which the positions of the teeth are gradually moved so as to achieve a proper teeth alignment condition.

Specifically, in the orthodontic bracket, a groove is formed into which the orthodontic archwire can be inserted and whose cross section is substantially rectangular (or is substantially formed in the shape of a letter U), the archwire is inserted into the groove and is thereafter fixed within the groove, a force corresponding to a tension applied to the archwire is made to act on the orthodontic bracket and thus the force for correction is made to act on a target tooth via the orthodontic bracket (Patent Document 1).

It is clinically known that, in the movement of the target tooth as described above, two mechanics which are a sliding mechanics and a loop mechanics are mainly present (Patent Document 2).

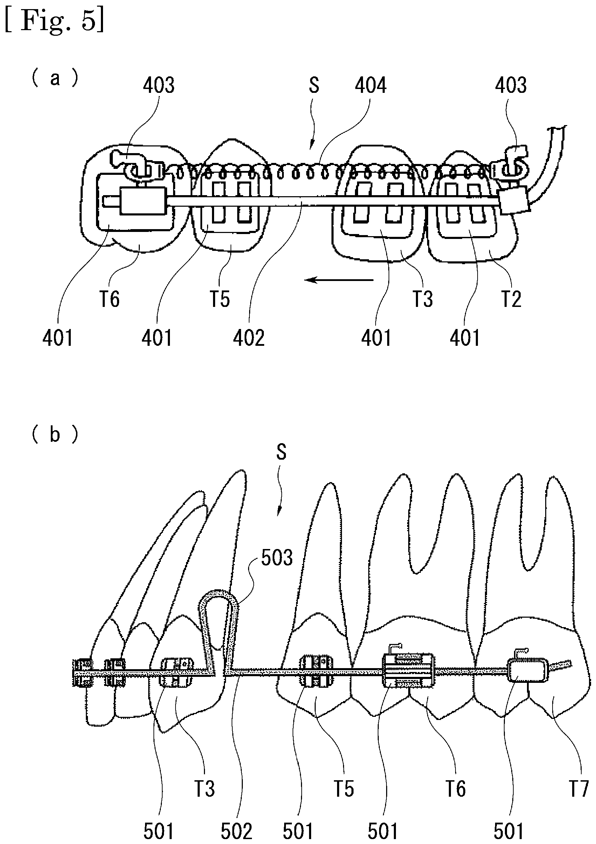

First, the sliding mechanics will be described with reference to Fig. 5 (a). Fig. 5 (a) shows an example of treatment in a case where, for example, a gap S is formed by removal of a first premolar T4 and where a canine tooth T3 which is a target tooth is moved into the gap S.

An archwire 402 is inserted through brackets 401 fixed to teeth T2 to T6, hooks 403 are attached to part of the brackets 401 and a coil spring 404 is locked between the hooks 403. In such a state, a force which is applied to the hooks 403 due to an elastic force produced by contraction of the coil spring 404 acts on the archwire 402, the archwire 402 is moved along the brackets 401 to a centrifugal side and thus the gap S formed between the second premolar T5 and the canine tooth T3 can be closed.

Next, the loop mechanics will be described with reference to Fig. 5(b). As in Fig. 5(a), Fig. 5(b) shows an example of treatment in the case where the gap S is formed by removal of the first premolar T4 and where the canine tooth T3 which is the target tooth is moved into the gap S.

The details of the loop mechanics are disclosed in, for example, Patent Document 3. As shown in Fig. 5(b), a part in the vicinity of the target tooth which is an orthodontic target is bent in the shape of a letter U or in the shape of a symbol Ω so as to form a loop portion 503. Then, an archwire 502 is fitted via brackets 501 to a predetermined position of a teeth alignment, the formed loop portion 503 is elastically deformed (the loop portion is activated) and thus the restoring force of the loop portion 503 acts on the canine tooth T3 as the target tooth.

Here, since the main line portion of the archwire 502 is curved along the teeth alignment, a tensile force is applied to the archwire 502, and thus a leg portion of the leg portions of the loop portion 503 on the side of the secondpremolar T5 is pulled to a backward side. By this movement, one side of the tip end portion of the loop portion 503 is opened so as to be moved backward, and a twist occurs. Consequently, on the bracket 501 of the canine tooth T3, through the leg portion on the side of the canine tooth T3, the resultant force of a backward force produced by the restoring force of the opened loop portion 503 in a direction in which the loop portion 503 is closed and a backward force produced by the restoring force of a curved portion which is twisted back acts as a horizontal force, with the result that the canine tooth T3 can be moved in a direction in which the gap is closed.

### Citation List

### Patent Documents

Patent Document 1: Japanese Patent No. 5624094
Patent Document 2: Japanese Unexamined Patent Application Publication No. H10-75962
Patent Document 3: Japanese Unexamined Patent Application Publication No. 2016-174781

### Summary of Invention

### Technical Problem

In the orthodontic method of the sliding mechanics using the coil spring disclosed in Patent Document 2 described above, it is possible to obtain a sufficient amount of closing of the gap caused by the activation of the archwire, and it is not necessary to perform bending processing on the archwire, with the result that, for example, the number of steps of processing is advantageously reduced.

On the other hand, disadvantageously, in the sliding mechanics, bending processing is not performed on the archwire, and thus the archwire used is inevitably shorter in length than that used in the loop mechanism. In particular, since in back side correction (lingual correction), an archwire used is much shorter in length than that used in front side correction, a force acting from the coil spring on the archwire is increased, and it is difficult to control torque. Hence, there is a concern that a phenomenon (bowing effect) remarkably appears in which the target tooth falls to the side of the gap.

When the sliding mechanics is applied to the back side correction, it is necessary to attach the coil spring to the back side of the tooth crown, and the attachment operation thereof is performed while the interior of the oral cavity of a patient is being looked into, with the result that it is difficult to perform the attachment operation. Furthermore, food particles resulting from a meal, etc., easily accumulate within the coil spring, and it is difficult to remove the food particles entering the inside of the coil spring with a toothbrush, etc., with the result that an unhygienic condition may occur.

In this regard, in the loop mechanics, the archwire is bent in the shape of a letter U or in the shape of a symbol Ω, and thus as compared with the sliding mechanics in which processing is not performed on the archwire, a long archwire can be used, with the result that it is easy to perform torque control on the target tooth. It is also possible to attach the archwire to the back side of the tooth crown for a short period of time, and thus the loop mechanics can be applied to both the front side correction and the back side correction.

However, as pointed out in Patent Document 3, it is clinically found that, even in the loop mechanics, it is very difficult to apply a horizontal force to the entire tooth only with the horizontal force caused by the activation of the loop portion. In other words, when the horizontal force caused by the activation of the loop portion can be made to uniformly act on the tooth root and the tooth crown, the entire tooth can be moved in parallel to the side of the gap. However, it is actually very difficult to apply a horizontal force to the tooth root. Hence, the horizontal force caused by the activation of the loop portion basically acts on the tooth crown of the canine tooth which is the target tooth. Consequently, due to moment about a resistance center located at the tooth root, the tooth is moved to rotate (inclination movement) instead of being moved in parallel, and when the rotational movement becomes excessive, this may induce the bowing effect and the root resorption in which the tooth root is shortened.

In order to cope with such a problem, Patent Document 3 suggests that the rigidity of the tip end portion of the loop portion in the archwire is relatively reduced as compared with the other portions, thus a proper horizontal force is applied to the tooth crown and proper moment is applied to the tooth root so as to realize the parallel movement of the entire tooth and that consequently, the root resorption in the orthodontic treatment is prevented.

However, it is considered that, as in Patent Document 3, in order for a low rigidity part to be formed in the loop portion, for example, processing for reducing, in the total length of the archwire, the cross-sectional area of a part which needs to have a low rigidity is performed or the part which needs to have a low rigidity is replaced with a material whose rigidity is low. However, although, in the processing for reducing the cross-sectional area, it is necessary to perform processing such as cutting, etching and pressing, the cross-sectional length of the archwire is very short so as to be in millimeters, and cutting on the very thin archwire described above requires a large number of steps of processing and a skilled technique, with the result that it is not realistic to perform the processing described above.

The present invention is made in view of the foregoing points, and an object thereof is to provide an orthodontic archwire which applies a proper torque to the tooth root of a target tooth that needs to be moved and that is an orthodontic target, which applies a proper horizontal force to the tooth crown of the target tooth so as to move the entire target tooth in parallel and which thereby can prevent root resorption due to an orthodontic treatment, a method for manufacturing such an orthodontic archwire and a method for attaching such an orthodontic archwire.

### Solution to Problem

In order to achieve the object described above, an orthodontic archwire according to the present invention includes : a loop portion which includes a substantially tubular winding portion that is formed by winding a wire material a predetermined number of times, a first drawn portion that is drawn in one direction of tangential directions of the winding portion and a second drawn portion that is drawn in the other direction of the tangential directions of the winding portion which is a direction opposite to the first drawn portion; and a main line portion which is continuously connected to the first drawn portion and the second drawn portion on the same axis center as the axis center of the first drawn portion and the axis center of the second drawn portion.

Here, the orthodontic archwire includes the loop portion which includes the substantially tubular winding portion that is formed by winding the wire material the predetermined number of times, the first drawn portion that is drawn in one direction of the tangential directions of the winding portion and the second drawn portion that is drawn in the other direction of the tangential directions of the winding portion which is the direction opposite to the first drawn portion, and thus it is possible to use, as a whole, the length of the archwire as a longer length.

Hence, by the activation of the winding portion, torque in the direction of a gap which is the direction of movement is easily made to act on the tooth root of a target tooth which is a target to be moved. Hence, when the target tooth is moved, since the tooth root of the target tooth can first be moved in the direction of the gap, it is possible to reduce the moment of the entire tooth about the tooth root, with the result that it is possible to prevent the bowing effect of the target tooth.

It is possible to use the length of the archwire as a longer length, and thus a certain torque can be made to act on the tooth root as described above whereas on the tooth crown, a horizontal force (the restoring force of the winding portion) in the direction of the gap due to the activation of the winding portion can be reduced. In other words, the properly reduced horizontal force in the direction of the gap can be made to act on the tooth crown, and thus it is possible to reduce the generation of moment which is due to a rapid horizontal force on the tooth crown and which has the tooth root as the point of application. Hence, it is possible to realize the parallel movement of the target tooth while reducing an increase in the orthodontic force on the target tooth.

The first drawn portion and the second drawn portion which are continuously connected to the main line portion of the loop portion are drawn in the different tangential directions of the winding portion, and thus the elastic force of the archwire due to the activation of the winding portion can be made to effectively act on each of the first drawn portion and the second drawn portion.

The orthodontic archwire includes the main line portion which is continuously connected to the first drawn portion and the second drawn portion on the same axis center as the axis center of the first drawn portion and the axis center of the second drawn portion, and thus the elastic force due to the activation of the winding portion can be made to effectively act on the main line portion from the first drawn portion and the second drawn portion.

The winding portion is formed by winding a predetermined position of the main line portion, and thus by an operation of winding the predetermined position of the linear main line portion, it is possible to easily form the winding portion and the loop portion including it, with the result that it is possible to reduce the chair time.

When the main line portion includes a curved portion which is formed in a substantially curved shape so as to correspond to front teeth and which is continuously connected to the first drawn portion, the archwire can be installed so as to correspond to the front teeth, and the elastic force due to the activation of the winding portion can be made to effectively act on the front teeth.

When the main line portion includes a linear portion which is formed substantially linearly so as to correspond to molars and which is continuously connected to the second drawn portion, the archwire can be installed so as to correspond to the molars, and the elastic force due to the activation of the winding portion can be made to effectively act on the molars.

When the winding portion is located on the main line portion so as to correspond to a gap portion formed by removal of a tooth, for example, in a case where, in order for a gap generated by removal of a first premolar to be filled, a canine tooth which is the target tooth is moved in the direction of the gap, the winding portion is present in the vicinity of the canine tooth which is the target tooth, and thus it is possible to reliably make the torque and the horizontal force due to the activation of the winding portion act on the canine tooth which is the target tooth.

When the axis center of the second drawn portion is offset to the side of a teeth alignment median line in plan view from the axis center of the first drawn portion along the winding axis direction of the winding portion, the winding portion is located so as to fit into a step portion present between the canine tooth and the premolar, and thus the step portion can be filled with the winding portion. Hence, it is not necessary to form, in the main line portion, a bent portion corresponding to the step portion, and thus it is possible to reduce the chair time for producing the archwire.

When the main line portion has a predetermined angle in side view from the linear portion toward the curved portion with respect to a virtual occlusal plane, the archwire is installed from the side of the molars to the side of the front teeth within the oral cavity of the person to be treated so as to be located from the side of the tooth crown to the side of the tooth root. Hence, it is possible to more reliably make the torque in the direction of the gap act on the tooth root of the canine tooth which is the target tooth.

When the winding portion is formed by winding the wire material three times or four times, the ratio between the torque acting on the tooth root of the target tooth and the horizontal force acting on the tooth crown is most balanced, and thus it is possible to prevent the bowing effect and the root resorption of the target tooth. Here, the width of the substantially tubular winding portion in the winding axis direction corresponds in magnitude to that of the step portion formed between the canine tooth and the molar, and thus it is possible to reduce an uncomfortable feeling when the archwire is installed within the oral cavity of the person to be treated.

When the winding portion is formed by winding the wire material twice or less, since the length of the archwire is relatively short, it is difficult to perform torque control on the tooth root, and the horizontal force acting on the tooth crown is increased, with the result that there is a concern about the bowing effect and the root resorption. Furthermore, since the width of the substantially tubular winding portion in the winding axis direction is shorter than that of the step portion formed between the canine tooth and the molar, in order for the main line portion of the archwire to have a shape along the step portion, it is necessary to further bending form in a predetermined position, with the result that the chair time for producing the archwire is increased.

On the other hand, when the winding portion is formed by winding the wire material five times or more, since the length of the archwire is relatively excessively long, the torque acting on the tooth root and the horizontal force acting on the tooth crown are reduced, with the result that it is likely that it takes a long time to move the target tooth in the direction of the gap or that the target tooth cannot be moved to a predetermined position. Furthermore, the width of the substantially tubular winding portion in the winding axis direction is longer than that of the step portion formed between the canine tooth and the molar, and thus it is likely that, when the archwire is installed within the oral cavity of the person to be treated, the winding portion hits the gum or the tongue of the person to be treated so as to produce an uncomfortable feeling.

In order to achieve the object described above, a method for manufacturing an orthodontic wire according to the present invention includes: a step of forming a substantially tubular winding portion by winding, a predetermined number of times, a position corresponding to a gap portion formed by removal of a tooth of a person to be treated on a main line portion which is extended linearly from one end to the other end such that a winding axis is substantially orthogonal to the main line portion; a step of forming a linear portion by substantially linearly forming one end side and the other end side of the main line portion so as to correspond to the teeth alignment of molars of the person to be treated; and a step of forming a curved portion by curving an approximate center of the main line portion so as to correspond to the teeth alignment of front teeth of the person to be treated.

Here, the step of forming the winding portion on the main line portion is included, and thus it is possible to use, as a whole, the length of the archwire as a longer length. Hence, by the activation of the winding portion, a certain torque can be made to act on the tooth root of the target tooth which is a target to be moved whereas on the tooth crown, a horizontal force (the restoring force of the winding portion) in the direction of the gap due to the activation of the winding portion can be reduced.

In other words, the properly reduced horizontal force in the direction of the gap can be made to act on the tooth crown, and thus it is possible to reduce the generation of moment which is due to a rapid horizontal force on the tooth crown and which has the tooth root as the point of application. Hence, it is possible to realize the parallel movement of the target tooth while reducing an increase in the orthodontic force on the target tooth.

The winding portion is formed at a position corresponding to the gap portion formed by removal of a tooth of the person to be treated, and thus for example, when in order for a gap generated by removal of a first premolar to be filled, a canine tooth which is the target tooth serving as a target to be moved is moved in the direction of the gap, the winding portion is present in the vicinity of the canine tooth which is the target tooth, and thus it is possible to reliably make the torque and the horizontal force due to the activation of the winding portion act on the canine tooth.

The step of forming the linear portion by substantially linearly forming the one end side and the other end side of the main line portion so as to correspond to the teeth alignment of the molars of the person to be treated is included, and thus the archwire can be formed substantially linearly so as to correspond to the molars, and the elastic force due to the activation of the winding portion can be made to effectively act on the molars.

The step of forming the curved portion by curving the approximate center of the main line portion so as to correspond to the teeth alignment of the front teeth of the person to be treated is included, and thus the archwire can be formed in a substantially curved shape so as to correspond to the front teeth, and the elastic force due to the activation of the winding portion can be made to effectively act on the front teeth.

In order to achieve the object described above, in a method for attaching an orthodontic archwire according to the present invention, an archwire formed with: a loop portion which includes a substantially tubular winding portion that is formed by winding a position on a main line portion extended linearly from one end to the other end a predetermined number of times, a first drawn portion that is drawn in one direction of tangential directions of the winding portion and a second drawn portion that is drawn in the other direction of the tangential directions of the winding portion which is a direction opposite to the first drawn portion; a curved portion which is continuously connected to the first drawn portion on the same axis center as the axis center of the first drawn portion and which is formed in a substantially curved shape in a predetermined position of the main line portion so as to correspond to front teeth; and a linear portion which is continuously connected to the second drawn portion on the same axis center as the axis center of the second drawn portion and which is formed substantially linearly in a predetermined position of the main line portion so as to correspond to molars is fitted via brackets such that the winding portion is fitted to a position corresponding to a gap portion formed by removal of a tooth of a person to be treated, that the linear portion is fitted to a position corresponding to the molars of the person to be treated and that the curved portion is fitted to a position corresponding to the front teeth of the person to be treated.

Here, the archwire includes the loop portion which includes the substantially tubular winding portion that is formed by winding the position on the main line portion extended linearly from one end to the other end the predetermined number of times, the first drawn portion that is drawn in one direction of the tangential directions of the winding portion and the second drawn portion that is drawn in the other direction of the tangential directions of the winding portion which is the direction opposite to the first drawn portion, and thus it is possible to use, as a whole, the length of the archwire as a longer length.

Hence, by the activation of the winding portion, torque in the direction of a gap which is the direction of movement is easily made to act on the tooth root of a target tooth which is a target to be moved. Hence, when the target tooth is moved, since the tooth root of the target tooth can first be moved in the direction of the gap, it is possible to reduce the moment of the entire tooth about the tooth root, with the result that it is possible to prevent the bowing effect of the target tooth.

It is possible to use the length of the archwire as a longer length, and thus a certain torque can be made to act on the tooth root as described above whereas on the tooth crown, a horizontal force (the restoring force of the winding portion) in the direction of the gap due to the activation of the winding portion can be reduced. In other words, the properly reduced horizontal force in the direction of the gap can be made to act on the tooth crown, and thus it is possible to reduce the generation of moment which is due to a rapid horizontal force on the tooth crown and which has the tooth root as the point of application. Hence, it is possible to realize the parallel movement of the target tooth while reducing an increase in the orthodontic force on the target tooth.

The curved portion which is continuously connected to the first drawn portion on the same axis center as the axis center of the first drawn portion and which is formed in the substantially curved shape in the predetermined position of the main line portion so as to correspond to the front teeth is included, and thus the archwire can be installed so as to correspond to the front teeth, and the elastic force of the archwire due to the activation of the winding portion can be made to effectively act from the first drawn portion on the curved portion.

The linear portion which is continuously connected to the second drawn portion on the same axis center as the axis center of the second drawn portion and which is formed substantially linearly in the predetermined position of the main line portion so as to correspond to the molars is included, and thus the archwire can be installed so as to correspond to the molars, and the elastic force of the archwire due to the activation of the winding portion can be made to effectively act from the second drawn portion on the linear portion.

When the main line portion includes the curved portion which is formed in the substantially curved shape so as to correspond to the front teeth and which is continuously connected to the first drawn portion, the archwire can be installed so as to correspond to the front teeth, and the elastic force due to the activation of the winding portion can be made to effectively act on the front teeth.

The archwire is fitted via the brackets such that the winding portion is fitted to the position corresponding to the gap portion formed by removal of the tooth of the person to be treated, that the linear portion is fitted to the position corresponding to the molars of the person to be treated and that the curved portion is fitted to the position corresponding to the front teeth of the person to be treated, and thus for example, in a case where, in order for the gap generated by removal of the first premolar to be filled, the canine tooth which is the target tooth is moved in the direction of the gap, the winding portion is present in the vicinity of the canine tooth which is the target tooth, with the result that it is possible to reliably make the torque and the horizontal force due to the activation of the winding portion act on the canine tooth which is the target tooth.

### Advantageous Effects of Invention

In the orthodontic archwire, the method for manufacturing the orthodontic archwire and the method for attaching the orthodontic archwire according to the present invention, a proper torque is applied to the tooth root of a target tooth that needs to be moved and that is an orthodontic target, a proper horizontal force is applied to the tooth crown of the target tooth so as to move the entire target tooth in parallel and thus it is possible to prevent root resorption due to an orthodontic treatment.

### Brief Description of Drawings

Fig. 1 is a diagram showing a state where a jig for producing dental braces according to an embodiment of the present invention is used;
Fig. 2 is an enlarged view of the jig for producing the dental braces according to the embodiment of the present invention;
Fig. 3 is a diagram showing a state where a wire is locked to the jig for producing the dental braces according to the embodiment of the present invention, Fig. 3(a) is a front view and Fig. 3(b) is a plan view;
Fig. 4 is a diagram showing a method for producing the dental braces according to the embodiment of the present invention; and
Fig. 5 is a diagram showing a conventional technology. Description of Embodiments

An embodiment of the present invention related to an orthodontic archwire, a method for manufacturing such an orthodontic archwire and a method for attaching such an orthodontic archwire will be described below with reference to the drawings so as to understand the present invention. For convenience of description of individual drawings, in a state where dental braces 1 including an orthodontic archwire 2 are fitted to the teeth T of a person to be treated, the direction of an upper jaw is defined as being upward and the direction of a lower jaw is defined as being downward. In the following description, it is assumed that a canine tooth T3 is moved into a gap S formed by removal of a first premolar T4.

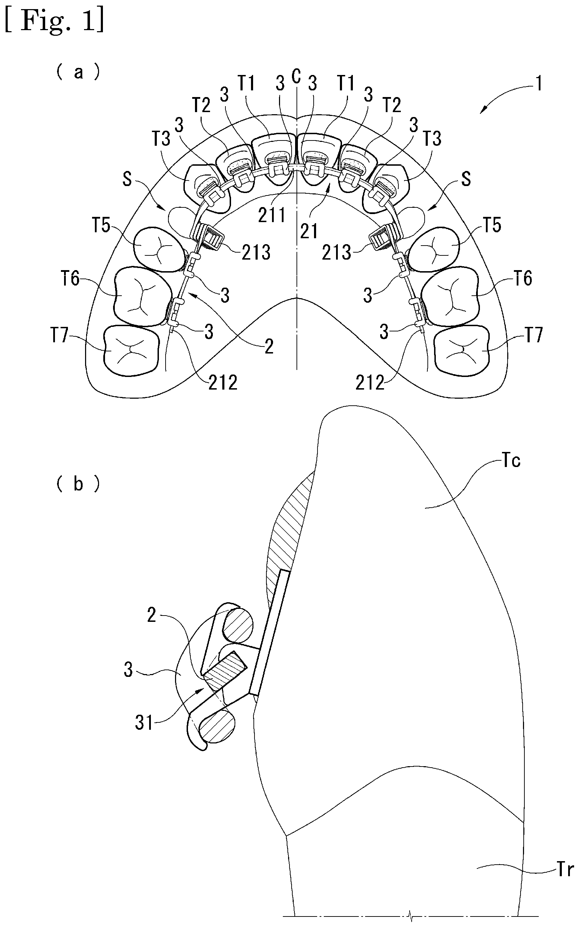

First, the dental braces 1 which include the orthodontic archwire 2 according to the present invention will be described with reference to Fig. 1. As shown in Fig. 1, the dental braces 1 are mainly formed with: brackets 3 which are fitted so as to make contact with the tooth crowns Tc of the teeth T of the person to be treated; and the archwire 2 which is inserted through grooves formed in the brackets 3.

The brackets 3 have a raw material such as stainless steel, titanium or ceramic, and the brackets 3 whose shapes differ according to front teeth T1 to T3 including a target tooth to be moved and molars T5 to T7 serving as anchor teeth are arranged so as to make contact with tooth crowns Tc on the side of the tongue of the person to be treated.

Here, the brackets 3 do not always need to be formed of a raw material such as stainless steel, titanium or ceramic. Any material may be used as long as the material is prevented from being degraded, corroded or damaged even in a harsh use environment within an oral cavity and is confirmed to be safe in medical terms.

The brackets 3 do not always need to be arranged so as to make contact with the tooth crowns Tc on the side of the tongue of the person to be treated. For example, the brackets 3 may be arranged so as to make contact with the tooth crowns Tc on the side of a labium. In the embodiment of the present invention, for convenience of description, a description will be given based on an embodiment in which the brackets 3 are brought into contact with the tooth crowns Tc on the side of the tongue.

The brackets 3 whose shapes differ depending on the front teeth T1 to T3 and the molars T5 to T7 do not always need to be used. The brackets 3 whose shapes are the same can be used for all the teeth T, and the brackets whose shapes differ according to the individual teeth T can also be used.

As shown in Fig. 1(b), in the bracket 3, an archwire insertion groove portion 31 is formed whose cross section is substantially concave and which is opened obliquely downward. The archwire 2 is inserted into the archwire insertion groove portion 31, and by a biasing force corresponding to the initial shape, it is possible to correct the teeth alignment of the person to be treated.

The archwire 2 is substantially rectangular in cross section and is formed of, for example, an elastic alloy material of nickel and titanium, and the archwire 2 includes, as shown in Fig. 1, : main line portions 21 formed with a curved portion 211 which is curved along positions corresponding to the front teeth T1 to T3 of the person to be treated and linear portions 212 which are formed along the molars T5 to T7 substantially linearly; and loop portions 213 which include winding portions 213a in positions corresponding to gaps S that are formed by removal of first premolars T4 on the main line portions 21, with the result that it is possible to practice a loop mechanics as the entire archwire 2.

Here, the archwire 2 does not always need to be formed of an alloy material of nickel and titanium. The archwire 2 may be formed of, for example, a single material such as glass fiber, a resin, copper or stainless steel. However, from a viewpoint that it is possible to generate a proper torque and that excellent controllability for performing the loop mechanics is provided, the archwire 2 is preferably formed of an alloy material of nickel and titanium.

The loop portions 213 do not always need to be formed at the positions corresponding to the gaps S formed between the canine teeth T3 and the second premolars T5. The loop portions 213 may be provided in any positions as long as the positions are in the vicinity of the gaps S formed by removal of teeth.

As shown in Fig. 1(a), the archwire 2 does not always need to have a length along the teeth alignment from the molar T7 on one side to the molar T7 on the other side. For example, the archwire 2 may be set so as to have a length along a teeth alignment from the premolar T5 on one side to the premolar T5 on the other side or may be set so as to locally have a length between teeth (anchor teeth) which serve as fixing sources on both sides of the target tooth.

The archwire 2 does not always need to be rectangular in cross section. The archwire 2 may be formed in, for example, a circular shape, an ellipse shape or another shape. However, from a viewpoint that torque is made to act on the target tooth, the archwire 2 is preferably rectangular in cross section.

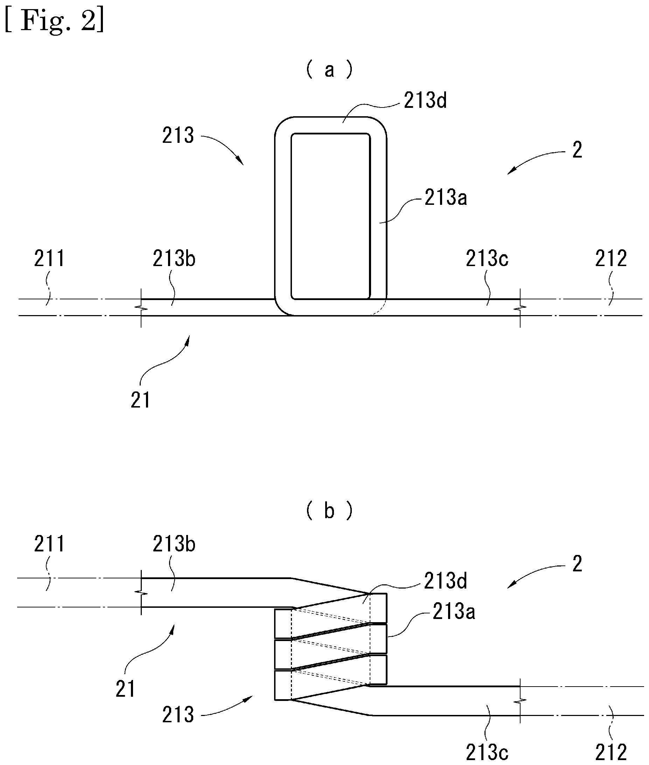

The detailed shape of the loop portion 213 formed on the main line portion 21 of the archwire 2 will be described with reference to Fig. 2. The loop portion 213 is formed with: the winding portion 213a which is formed in a substantially tubular shape in a winding axis direction by winding the main line portion 21 three times or four times (three times in Fig. 2); a first drawn portion 213b which is continuously connected to the curved portion 211 of the main line portion 21 on one end side of the winding portion 213a along a tangential direction of the winding portion 213a on the same axis center as the axis center of the curved portion 211; and a second drawn portion 213c which is continuously connected to the linear portion 212 of the main line portion 21 on the other end side of the winding portion 213a on the same axis center as the axis center of the linear portion 212. The center axis of the second drawn portion 213c is formed so as to be offset to the side of a teeth alignment median line C from the axis center of the first drawn portion 213b along the winding axis direction of the winding portion 213a when the archwire 2 is seen in plan view.

Here, the winding portion 213a does not always need to be formed by winding the main line portion 21 three times or four times. For example, the winding portion 213a may be formed by winding the main line portion 21 twice or five or more times. However, as a result of the examination of the inventor, when the number of windings in the winding portion was three times or four times, by the activation of the winding portion 213a, the magnitude of the torque acting on the tooth root Tr of the target tooth (canine tooth T3) and the magnitude of the horizontal force acting on the tooth crown Tc were proper, and thus the entire target tooth was able to be moved in a horizontal direction.

The axis center of the second drawn portion 213c does not always need to be offset to the side of the teeth alignment median line C from the axis center of the first drawn portion 213b along the winding axis direction of the winding portion 213a when the archwire 2 is seen in plan view. However, the axis center of the second drawn portion 213c is offset to the side of the teeth alignment median line C from the axis center of the first drawn portion 213b along the winding axis direction of the winding portion 213a when the archwire 2 is seen in plan view, and thus it is possible to fit the winding portion 213a into a step formed between the canine tooth T3 and the second premolar T5. Hence, unlike a conventional archwire, in addition to the production of the loop portion, a curved portion along a step portion does not need to be formed, with the result that it is possible to reduce the chair time.

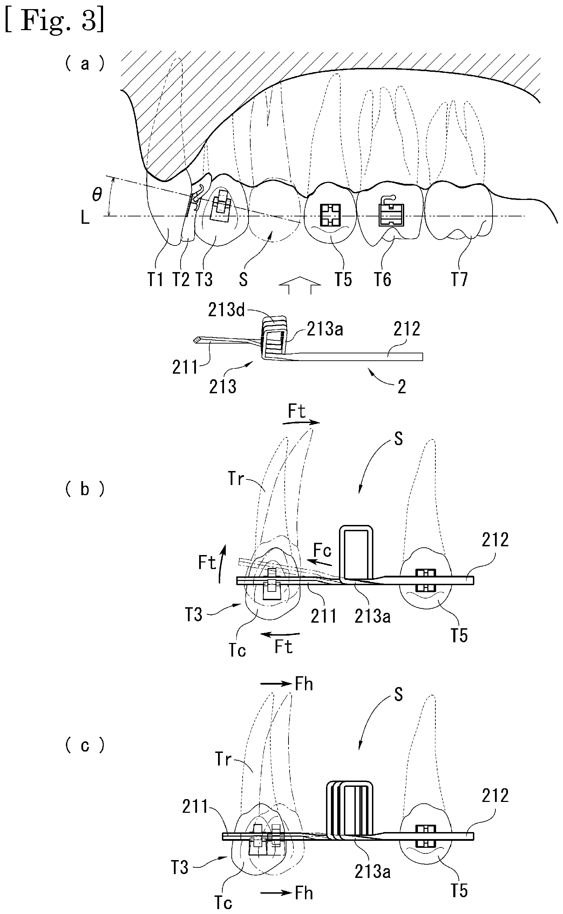

Fig. 3 is a diagram schematically showing the movement of the canine tooth T3 which is the target tooth by the activation of the winding portion 213a of the archwire 2 according to the embodiment of the present invention. Fig. 3(a) is a side view showing a state where the archwire 2 is fitted via the brackets 3 along the back side of the teeth alignment on the side of the upper jaw of the person to be treated.

When the archwire 2 is fitted along the teeth alignment of the person to be treated, as shown in Fig. 3(a), the archwire 2 is installed such that the tip end portion 213d (portion farthest from the main line portion 21) of the winding portion 213a is directed to the side of a gum. In other words, as shown in Fig. 3(a), when the archwire 2 is fitted along the back side of the teeth alignment on the side of the upper jaw of the person to be treated, the archwire 2 is installed such that the tip end portion 213d of the winding portion 213a is directed upward (to the side of the gum) (whereas when the archwire 2 is fitted along the teeth alignment on the side of the lower jaw of the person to be treated, the archwire 2 is installed such that the tip end portion 213d of the winding portion 213a is directed downward) . The archwire 2 is installed so as to have a predetermined angle (about 10° to 15°), in side view from one side of the person to be treated, from the linear portion 212 on the side of the molars (T5 to T7) to the curved portion 211 on the side of the front teeth (T1 to T3) with respect to a virtual occlusal plane L.

In the archwire 2 installed as described above, the winding portion 213a is activated, and thus at an early stage of the correction, first, as shown in Fig. 3(b), a force Fc in an oblique direction toward the direction of the gum acts from the tangential direction of the winding portion 213a on the curved portion 211 of the main line portion 21. The force Fc in the oblique direction makes a clockwise torque Ft in the plane of the figure act on, via the bracket 3, the tooth root Tr of the canine tooth T3 which is the target tooth. In other words, at an early stage of the correction, the torque Ft dominantly acts on the canine tooth T3, and thus it is possible to move the canine tooth T3 from the part of the tooth root Tr of the canine tooth T3 toward the direction of the gap S.

When the part of the tooth root Tr of the canine tooth T3 is moved in the direction of the gap S, by the restoring force of the archwire 2, as shown in Fig. 3(c), a horizontal force Fh dominantly acts on the tooth crown Tc of the canine tooth T3 this time. Here, the archwire 2 is wound three times (or four times) in the winding portion 213a, and thus the properly reduced horizontal force Fh can be made to act on the tooth crown Tc. Hence, at a later stage of the correction, by the horizontal force Fh acting on the tooth crown Tc of the canine tooth T3, the tooth crown Tc is moved in the direction of the gap S. Here, since the tooth root Tr of the canine tooth T3 is already moved to the side of the gap S, it is possible to prevent a bowing effect in which the canine tooth T3 falls to the side of the gap S about the tooth root Tr and the root resorption resulting therefrom.

As described above, the tip end portion 213d of the winding portion 213a is directed to the side of the gum of the person to be treated, the archwire is installed within the oral cavity of the person to be treated so as to have the predetermined angle with respect to the virtual occlusal plane L and thus, at an early stage of the correction, the proper torque Ft can be made to act on the tooth root Tr of the canine tooth T3 which is the target tooth and the proper horizontal force Fh can be made to act on the tooth crown Tc, with the result that it is possible to move the entire canine tooth T3 in parallel in the direction of the gap formed by removal of the tooth.

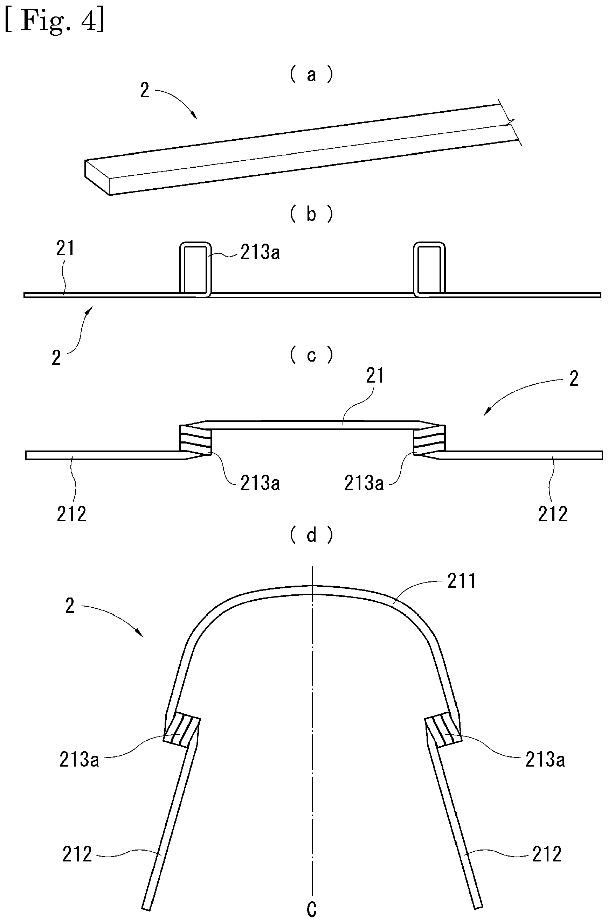

A method for manufacturing the archwire according to the present invention will then be described with reference to Fig. 4.

### [Winding Portion Formation Step]

As shown in Fig. 4(a), in the archwire 2 which is linearly extended from one end to the other end, the winding portions 213a are first formed at positions corresponding to the gaps S formed by removal of the teeth of the person to be treated. In other words, as shown in Fig. 4(b), the positions which are symmetrical with respect to an approximate center of the archwire 2 and which are predetermined positions of the main line portion 21 are wound such that the winding axis direction is substantially vertical with respect to the main line portion 21, and thus the substantially tubular winding portions 213a are formed.

### [Linear Portion Formation Step]

After the winding portions 213a are formed at the positions corresponding to the gaps formed by removal of the teeth, as shown in Fig. 4(c), one end side of the winding portion 213a in the archwire 2 and the other end side of the winding portion 213a are formed substantially linearly so as to correspond to the teeth alignment of the molars of the person to be treated, and thus the linear portions 212 are formed. Here, the linear portions 212 may be formed by being slightly curved so as to correspond to the teeth alignment of the person to be treated.

### [Curved Portion Formation Step]

After the formation of the winding portions 213a and the linear portions 212, as shown in Fig. 4(d), the main line portion 21 between the winding portions 213a, 213a is curved so as to correspond to the teeth alignment of the front teeth of the person to be treated, and thus the curved portion 211 is formed. Here, the main line portion 21 is curved such that when the archwire 2 is seen in plan view, the linear portions 212 are located on the side of the winding axis direction of the winding portion 213a (that is, when the archwire 2 is seen in plan view, the linear portions 212 are offset to the side of the teeth alignment median line C from the curved portion 211) .

The brackets 3 are attached to the archwire 2 manufactured in the steps described above, and the archwire 2 is fitted to the teeth T of the person to be treated with an adhesion means such as a resin.

Here, in the method for manufacturing the archwire, the archwire does not always need to be manufactured in the order of the winding portion formation step, the linear portion formation step and the curved portion formation step. These manufacturing steps can be exchanged as necessary.

As described above, in the orthodontic archwire, the method for manufacturing the orthodontic archwire and the method for attaching the orthodontic archwire according to the present invention, the proper torque is applied to the tooth root of the target tooth which needs to be moved and which is the orthodontic target, the proper horizontal force is applied to the tooth crown of the target tooth and thus the entire target tooth is moved in parallel, with the result that it is possible to prevent the root resorption due to the orthodontic treatment.

### Reference Signs List

- 1: Dental brace
- 2: Archwire
- 21: Main line portion
- 211: Curved portion
- 212: Linear portion
- 213: Loop portion
- 213a: Winding portion
- 213b: First drawn portion
- 213c: Second drawn portion
- 213d: Tip end portion
- 3: Bracket
- 31: Archwire insertion groove portion
- C: Teeth alignment median line
- L: Virtual occlusal plane
- S: Gap
- T: Tooth
- T1: Central incisor
- T2: Lateral incisor
- T3: Canine tooth
- T5: Second premolar
- T6, T7: Molar
- Tc: Tooth crown
- Tr: Tooth root

## Claims

1. An orthodontic archwire comprising:
a loop portion which includes: a substantially tubular winding portion that is formed by winding a wire material a predetermined number of times; a first drawn portion that is drawn in one direction of tangential directions of the winding portion; and a second drawn portion that is drawn in the other direction of the tangential directions of the winding portion which is a direction opposite to the first drawn portion; and
a main line portion which is continuously connected to the first drawn portion and the second drawn portion on the same axis center as an axis center of the first drawn portion and an axis center of the second drawn portion.

2. The orthodontic archwire according to Claim 1,
wherein the winding portion is formed by winding a predetermined position of the main line portion.

3. The orthodontic archwire according to Claim 1,
wherein the main line portion is formed with: a curved portion which is formed in a substantially curved shape so as to correspond to front teeth and which is continuously connected to the first drawn portion; and a linear portion which is formed substantially linearly so as to correspond to molars and which is continuously connected to the second drawn portion, and
the winding portion is located on the main line portion so as to correspond to a gap portion formed by removal of a tooth.

4. The orthodontic archwire according to Claim 3,
wherein the axis center of the second drawn portion is offset to a side of a teeth alignment median line in plan view from the axis center of the first drawn portion along a winding axis direction of the winding portion.

5. The orthodontic archwire according to Claim 3,
wherein the main line portion has a predetermined angle in side view from the linear portion toward the curved portion with respect to a virtual occlusal plane.

6. The orthodontic archwire according to Claim 1,
wherein the winding portion is formed by winding the wire material three times or four times.

7. A method for manufacturing an orthodontic archwire, the method comprising:
a step of forming a substantially tubular winding portion by winding, a predetermined number of times, a position corresponding to a gap portion formed by removal of a tooth of a person to be treated on a main line portion which is extended linearly from one end to the other end such that a winding axis is substantially orthogonal to the main line portion;
a step of forming a linear portion by substantially linearly forming one end side and the other end side of the main line portion so as to correspond to a teeth alignment of molars of the person to be treated; and
a step of forming a curved portion by curving an approximate center of the main line portion so as to correspond to a teeth alignment of front teeth of the person to be treated.

8. A method for attaching an orthodontic archwire,
wherein an archwire formed with: a loop portion which includes a substantially tubular winding portion that is formed by winding a wire material a predetermined number of times, a first drawn portion that is drawn in one direction of tangential directions of the winding portion and a second drawn portion that is drawn in the other direction of the tangential directions of the winding portion which is a direction opposite to the first drawn portion; a curved portion which is formed in a substantially curved shape so as to correspond to front teeth and which is continuously connected to the first drawn portion on the same axis center as an axis center of the first drawn portion; and a linear portion which is formed substantially linearly so as to correspond to molars and which is continuously connected to the second drawn portion on the same axis center as an axis center of the second drawn portion is fitted via brackets such that the winding portion is fitted to a position corresponding to a gap portion formed by removal of a tooth of a person to be treated, that the linear portion is fitted to a position corresponding to the molars of the person to be treated and that the curved portion is fitted to a position corresponding to the front teeth of the person to be treated.
